Europäisches Patentamt

European Patent Office

Office européen des brevets

(19)

(11) Veröffentlichungsnummer: **0 024 543**
**B1**

# (12) EUROPÄISCHE PATENTSCHRIFT

(45) Veröffentlichungstag der Patentschrift:
**18.05.83**

(21) Anmeldenummer: **80104272.2**

(22) Anmeldetag: **19.07.80**

(51) Int. Cl.³: **F 24 J 3/04**, F 28 F 17/00

(54) **Wärmekollektor für die Aufnahme von Umgebungswärme.**

(30) Priorität: **25.08.79 DE 2934481**

(43) Veröffentlichungstag der Anmeldung:
**11.03.81 Patentblatt 81/10**

(45) Bekanntmachung des Hinweises auf die Patenterteilung:
**18.05.83 Patentblatt 83/20**

(84) Benannte Vertragsstaaten:
**AT BE CH FR GB IT LI LU NL SE**

(56) Entgegenhaltungen:
**DE-A-2 251 690**
**GB-A-773 927**
**US-A-2 889 692**
**US-A-3 464 488**

(73) Patentinhaber: **BROWN, BOVERI & CIE**
**Aktiengesellschaft Mannheim, Kallstadter Strasse 1,**
**D-6800 Mannheim Käfertal (DE)**

(72) Erfinder: **Heidtmann, Uwe, Ing. (grad.), Bunsenstrasse 4,**
**D-6901 Nussloch (DE)**
Erfinder: **Hoffmann, Gerd, Mauritiusstrasse 23,**
**D-6837 St. Leon-Rot (DE)**

(74) Vertreter: **Kempe, Wolfgang, Dr. et al, c/o Brown, Boveri**
**& Cie AG Postfach 351, D-6800 Mannheim 1 (DE)**

ACTORUM AG

Wärmekollektor für die Aufnahme von Umgebungswärme

Die Erfindung betrifft einen Wärmekollektor für die Aufnahme von Umgebungswärme mit midenstens einem etwa vertikal angeordneten Wärmetauschelement, insbesondere mit wenigstens einer an seinem unteren Endbereich angeordneten Auffangrinne.

Wärmekollektoren dieser Art dienen bei Wärmepumpen- oder Solarheizungsanlagen zur Aufnahme von Umgebungswärme und sind daher im Freien angeordnet. Während des Winterbetriebs und/oder bei Durchströmung des Wärmekollektors mit einem Wärmeträgermedium, dessen Temperatur unterhalb null Grad Celsius liegt, kann sich die Wärmetauschfläche mit einer Eisschicht überziehen. Bei Sonneneinstrahlung oder Durchfluss von warmem Wärmeträger löst sich die Eisschicht von der Wärmetauschfläche und stürzt ab. Hierbei besteht die Gefahr, dass durch das abstürzende Eis Personen und/oder Gebäudeteile zu Schaden kommen können.

Ein bekannter plattenförmiger Wärmekollektor der eingangs genannten Art (US-A Nr. 2889692) ist als Verdampfer in einem Kühlgerät angeordnet. Dieser weist hierbei an seinem unteren Ende Abbiegungen auf, die ein paar Rinnen bilden für das Sammeln von Kondensat, das vom Verdampfer abtropft. Die Rinnen sind jedoch nicht in der Lage, grössere Mengen von Eis mit Sicherheit abzufangen, wie dies beim eingangs beschriebenen Einsatz eines Wärmekollektors erforderlich ist.

Der Erfindung liegt daher die Aufgabe zugrunde, einen Wärmekollektor der eingangs genannten Art auf einfache und somit kostengünstige Weise so weiterzubilden, dass eine Gefährdung durch herabfallende Eisstücke oder Eisteile vermieden ist.

Diese Aufgabe wird erfindungsgemäss bei einem Wärmekollektor der eingangs genannten Art dadurch gelöst, dass die von der Umgebungsluft berührte Wärmetauschfläche des Wärmetauschelements wenigstens bereichsweise Halter für eine sich bildende Eisschicht aufweist.

Die Anordnung von Haltern für die sich bildende Eisschicht zeigt einen Weg, wie eine Gefährdung durch herabfallendes Eis verhindert werden kann. Hierbei kann durch Anordnung einer Auffangrinne am unteren Ende des Wärmetauschelements die Sicherheit gegebenenfalls zusätzlich erhöht werden. Welche der genannten Massnahmen zu ergreifen sind, hängt jeweils vom Einzelfall ab. Ist die Gefährdung von Menschen oder die Beschädigung des Untergrundes durch herabfallendes Eis wenig wahrscheinlich, so wird die Anordnung von Haltern ausreichend sein, ist jedoch eine Gefährdung zu vermeiden, so kann man beide Massnahmen, nämlich Halter und Auffangrinne, gleichzeitig ergreifen. Die Erfindung schlägt somit für jeden Anwendungsfall angepasste Sicherheitsmassnahmen vor.

Vorteilhafte Ausgestaltungen der Erfindung sind in den Unteransprüchen beschrieben, wobei der Lehre des Anspruches 7 besondere Bedeutung zukommt.

Weitere Vorteile und Merkmale der Erfindung gehen aus der folgenden Beschreibung von Ausführungsbeispielen im Zusammenhang mit den schematischen Zeichnungen hervor. Hierbei zeigen:

Fig. 1 die perspektivische Seitenansicht des Gegenstands der Erfindung,

Fig. 2 eine Ansicht des Gegenstands der Fig. 1 aus Richtung II,

Fig. 3 eine Ausführungsvariante der Auffangrinnenbefestigung in einer Darstellung entsprechend Fig. 2,

Fig. 4 eine weitere Ausführungsvariante von Auffangrinne sowie deren Befestigung in einer Darstellung entsprechend Fig. 2,

Fig. 5 eine Ausführungsvariante des Gegenstands der Fig. 2 mit vier nebeneinander angeordneten Wärmetauschelementen,

Fig. 6 eine Seitenansicht eines Wärmetauschelements mit in versetzten Reihen angeordneten Haltern,

Fig. 7 bis 11 verschiedenen Ausführungsformen von Haltern als Einzelheiten und in grösserem Massstab, und

Fig. 12 Wärmekollektoren in verschiedener Anordnung an einem Gebäude.

Gleiche Teile sind in den einzelnen Figuren mit den gleichen Bezugszeichen versehen.

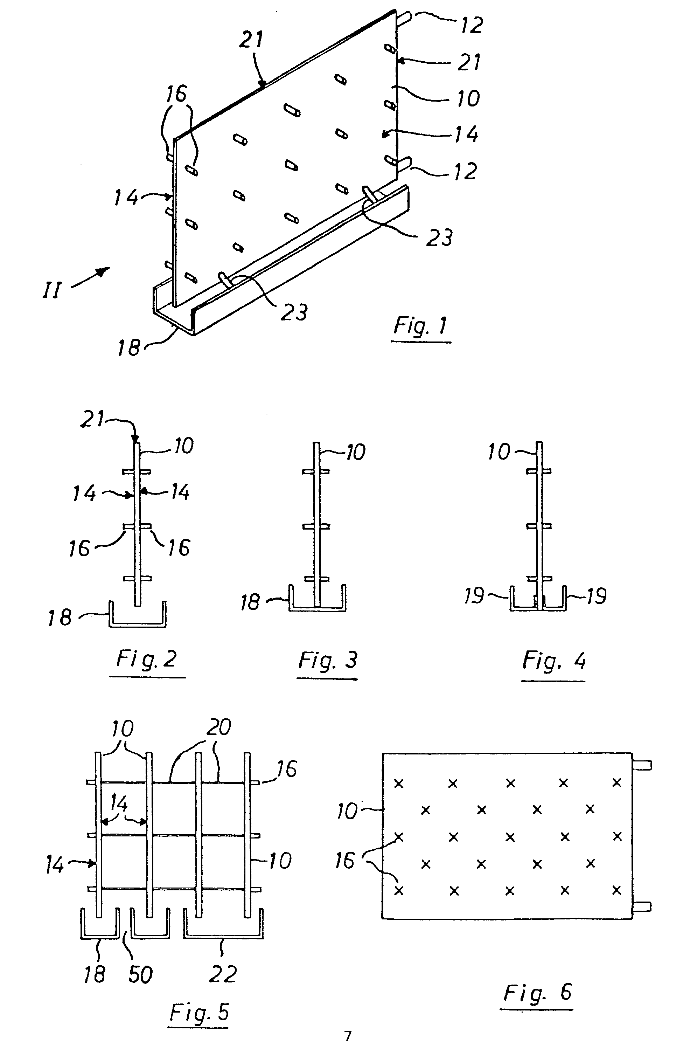

In Fig. 1 ist ein Wärmekollektor mit einem einzigen Wärmetauschelement 10 dargestellt. Dieses besteht hierbei aus einem flachen rechteckigen Körper, der zum Beispiel aus zwei Metallplatten zusammengesetzt ist, die zwischen sich Hohlräume für den Durchfluss eines Wärmeträgers begrenzen. Der Wärmeträger wird hierbei über die Anschlussstutzen 12 zugeführt bzw. abgeführt. Jedoch sind auch andere Ausführungsformen des Wärmetauschelements möglich, zum Beispiel mit Wärmetauschrohren.

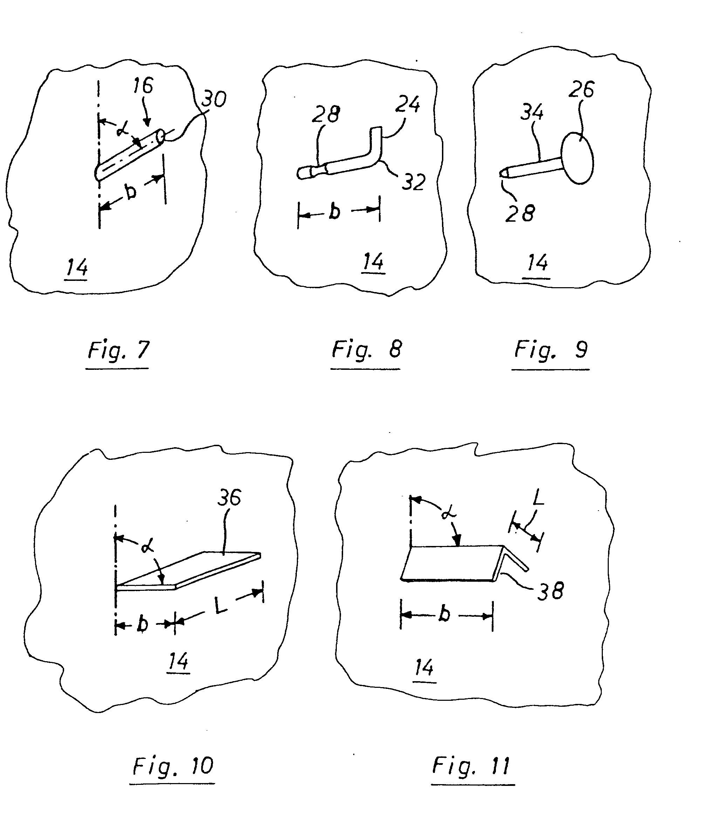

Auf der Wärmetauschfläche 14, welche von den beiden Seiten des etwa vertikal angeordneten Wärmetauschelements 10 gebildet ist, sind im vorliegenden Ausführungsbeispiel drei übereinander, mit Abstand verlaufende Reihen von Haltern 16 angeordnet. Diese bestehen aus Vorsprüngen der Wärmetauschfläche 14, vorteilhafte Ausführungsformen werden im Zusammenhang mit den Fig. 7 bis 11 näher erläutert.

Unterhalb des Wärmetauschelements 10 kann zusätzlich eine Auffangrinne 18 angeordnet sein. Diese ist im Querschnitt U-förmig oder halbrund, nach oben offen und besitzt eine Länge, die auf die horizontale Erstreckung des Wärmetauschelements 10 abgestimmt ist. Der Abstand der Auffangrinne 18 vom Wärmetauschelement 10 sowie die lichte Weite der Auffangrinne sind so bemessen, dass von der Wärmetauschfläche 10 abtropfendes Regenwasser oder Schmelzwasser bzw. vom Wärmetauschelement abfallende Eisstücke oder Eisschichten von der Auffangrinne 18 aufgenommen und zurückgehalten werden. Zur Entwässerung der Auffangrinne 18 kann diese gegebenenfalls mit einer Entwässerungsleitung verbunden sein.

In Fig. 2 ist das Wärmetauschelement 10 in Ansicht aus Richtung II der Fig. 1 dargestellt. Man erkennt deutlich die zu beiden Seiten der Wärmetauschfläche 14 angeordneten Halter 16 sowie das Profil der Auffangrinne 18, die entweder mit Abstand am Wärmetauschelement 10 oder am Untergrund festgelegt sein kann. Im allgemeinen ist das Wärmetauschelement 14 vertikal angeordnet, jedoch kann dieses auch leicht geneigt zur Vertikalen verlaufen, wobei der Neigungswinkel etwa bis zu 30° betragen kann. In Fig. 1 ist die Auffangrinne 18 mit Streben 23 unten am Wärmetauschelement 10 befestigt.

Wärmekollektoren mit Wärmetauschelementen 10 der vorbeschriebenen Art, welche vorzugsweise für die Aufnahme von Umgebungswärme in Wärmepumpenanlagen eingesetzt werden, überziehen sich zum Beispiel im Winterbetrieb mit einer Eisschicht. Bei Sonneneinstrahlung oder Durchfluss von warmem Wärmeträger lösen sich die Eisschichten von der Wärmetauschfläche 14. Diese können jedoch zumindest nicht in grossen Stükken vom Wärmetauschelement 10 abfallen, da die Eisschichten an den Halterungen 14 hängenbleiben bzw. aufgehängt sind. Eisstücke, welche trotzdem abfallen, werden gegebenenfalls von der Auffangrinne 18 zurückgehalten. Die Wärmekollektoren können daher auch über begangenen Flächen angeordnet werden, ohne dass Passanten durch herabfallende Eisstücke gefährdet werden. Auch bei einer Anordnung der Wärmekollektoren auf Dächern ist die erfindungsgemässe Ausbildung von Vorteil, da hierbei Beschädigungen der Dächer durch herabfallende Eisstücke ausgeschaltet sind.

Je nach Anwendungsfall wird man den Wärmekollektor nur mit Haltern 16 oder zusätzlich mit einer Auffangrinne ausrüsten. Bei einer Anordnung auf Dächern oder in Bereichen, in denen Passanten durch herabfallende Eisstücke kaum gefährdet werden können, wird die Anordnung der Halter 16 im allgemeinen ausreichend sein, wobei die zusätzliche Anwendung der Auffangrinne dann empfehlenswerter ist, wenn zusätzlich noch abtropfendes Regen- oder Tauwasser aufgefangen und kontrolliert abgeleitet werden soll. Besteht dagegen die Forderung nach grösstmöglicher Sicherheit gegen herabfallende Eisstücke, so wird man den Wärmekollektor sowohl mit Haltern 16 als auch mit Rinnen 18 versehen.

Der Abstand der einzelnen Halter 16 ist so zu wählen, dass sich bildende Eisschichten mit ausreichender Sicherheit festgehalten werden. Als Richtwert für den gegenseitigen Abstand können 0,1 bis 0,3 m gelten. Wie aus Fig. 6 ersichtlich, können die Halter 16 vorteilhaft in gegeneinander versetzten Reihen angeordnet sein. Die Halter 16 sind hierbei durch Kreuze angedeutet.

In der Regel wird man nur jene Wärmetauschflächen mit Haltern 16 versehen, über welche der Wärmeaustausch hauptsächlich stattfindet. An kleinen Flächen, wie zum Beispiel an Anschlussstutzen oder an der umlaufenden Kantenfläche 21 des Wärmetauschelements 10 wird man im allgemeinen keine Halter anbringen.

In Figur 3 ist die Auffangrinne 18 direkt an die Unterkante des Wärmetauschelements 10 gestossen und befestigt, wodurch die Auffangrinne in zwei, zum Beispiel gleich grosse Teile aufgeteilt wird, die zu beiden Seiten des Wärmetauschelements verlaufen. Diese Ausführungsform hat den Vorteil, dass sich bildende Eisschichten zusätzlich an der Auffangrinne 18 abstützen können.

Den gleichen Vorteil weist auch die Ausbildung gemäss Fig. 4 auf. Hier ist jeder Wärmetauschfläche 14 eine Auffangrinne 19 zugeordnet und am unteren Rand des Wärmetauschelements 10 befestigt. Diese Ausbildung wird dann bevorzugt, wenn der untere Rand der Wärmetauschfläche jeweils gerade verläuft und daher jeweils ein Schenkel der Auffangrinne 19 am geraden Rand auf einfache Weise, gegebenenfalls unter Einfügung eines Dichtmittels, befestigt werden kann. Der für die Befestigung vorgesehene Schenkel kann hierbei kürzer als der andere Schenkel sein. Je nach Ausbildung des Wärmetauschelements können die Auffangrinnen 19 gegebenenfalls auch aus Abkantungen des unteren Randes bestehen.

In Fig. 5 ist ein Wärmekollektor mit vier nebeneinander angeordneten Wärmetauschelementen 10 dargestellt, wobei die Ansicht aus Richtung II der Fig. 1 erfolgt. Der gegenseitige Abstand der Wärmetauschelemente beträgt hierbei etwa 0,1 bis 0,8 m. Um die Wärmetauschelemente 10 gegeneinander abzustützen und den Gesamtaufbau des Wärmekollektors zu versteifen, sind diese durch Verbindungsanker 20 miteinander verbunden. Die Verbindungsanker 20, die zum Beispiel aus Metallstäben bestehen, dienen hierbei gleichzeitig als Halter für die sich bildenden Eisschichten. Da im allgemeinen nur wenige Verbindungsanker 20 zur Versteifung des Aufbaus erforderlich sind, können selbstverständlich Verbindungsanker 20 und Halter 16 in beliebiger Kombination nebeneinander angeordnet sein.

Wie weiter aus Fig. 5 ersichtlich, kann jedes Wärmetauschelement 10 zusätzlich mit einer eigenen Auffangrinne 18 versehen sein; es können jedoch auch mehrere Wärmetauschelemente 10 mit einer gemeinsamen Auffangrinne 22 ausgerüstet sein. Die letztgenannte Ausführungsform wird man bei geneigter Anordnung der Wärmetauschelemente 10 bevorzugen, da hierbei der Auffangbereich der Auffangrinne 22 derart vergrössert ist, dass trotz der Halter abfallendes Eis mit Sicherheit aufgefangen wird. Die Zuordnung von zwei Wärmetauschelemente zu einer gemeinsamen Auffangrinne ist auch bei der Anordnung bzw. Ausbildung der Auffangrinnen gemäss den Fig. 3 und 4 möglich, wobei sich im Falle der Fig. 4 die Auffangrinne 19 zwischen zwei benachbarten Wärmetauschelementen erstrecken würde.

In den Fig. 7 bis 11 sind verschiedene Ausführungsformen von Haltern 16 dargestellt. Danach können diese als Stifte 30 (Fig. 7), Haken 32 (Fig. 8), Nägel 34 (Fig. 9), Kurzrippen 36 (Fig. 10) oder als dachförmig gebogene Blechteile 38 (Fig. 11) ausgebildet sein. Die Halter gemäss den Fig. 8 und 9 weisen an ihren freien Enden Abbiegungen 24 nach oben bzw. Köpfe 26 auf, so dass Eisschichten von den Haltern nicht abrutschen können. Um dies auch bei den Haltern gemäss den Fig. 7, 10 und 11 zu erreichen, deren freie Enden glatt sind, sind diese Halter unter einem Winkel α zur Vertikalen nach oben geneigt, so dass auch von diesen Haltern ein Abgleiten der Eisschichten verhindert ist. Der Winkel liegt in einem Bereich von vorzugsweise 60 bis 80°.

Da es für das Festhalten der Eisschichten wichtig ist, dass diese an den Haltern 16 festgefroren bleiben, sollte ein Wärmefluss von den meist wärmeren Wärmetauschflächen 14 in die Halter 16 verhindert und somit einem Lostauen der Eisschichten von den Haltern 14 entgegengewirkt werden. Hierdurch bleiben die Eisschichten bis zu ihrem völligen Abschmelzen an den Haltern 16 aufgehängt. Um dies zu erreichen, weisen die Halter 16 einen Querschnitt auf, der klein ist im Verhältnis zu ihrer Oberfläche. Auf diese Weise ist der Wärmefluss von der Wärmetauschfläche in die Halter verringert und die Temperatur der Halter 16 ist in erster Linie von der Eisschicht bestimmt.

Eine andere bevorzugte Möglichkeit, den Wärmefluss von der Wärmetauschfläche 14 in die Halter 16 zu verringern, besteht darin, dass die Halter 16 wenigstens eine Stelle 28 mit verringertem Querschnitt aufweisen, so dass der Wärmefluss hierdurch gebremst wird. Der Querschnitt ist hierbei so weit verringert, dass gerade noch ausreichende Festigkeit gegeben ist. Des weiteren ist die Stelle 28 möglichst nahe an der Wärmetauschfläche 14 angeordnet (vgl. Fig. 8 und 9).

Bezüglich der Abmessungen der Halter 16 gelten folgende Richtwerte: Länge b quer zur Wärmetauschfläche 14 etwa 3 bis 10 cm, Länge der Abbiegung 24 bzw. Durchmesser des Kopfes 26 etwa 2 bis 4 cm, Länge L der Kurzrippe gemäss der Fig. 10 sowie Länge L der Dachfläche gemäss der Fig. 11 etwa 2 bis 5 cm. Durchmesser der Halter gemäss den Fig. 7 bis 9 etwa 3 bis 5 mm, Dicke der Halter gemäss den Fig. 10 und 11 etwa 0,7 bis 1,5 mm.

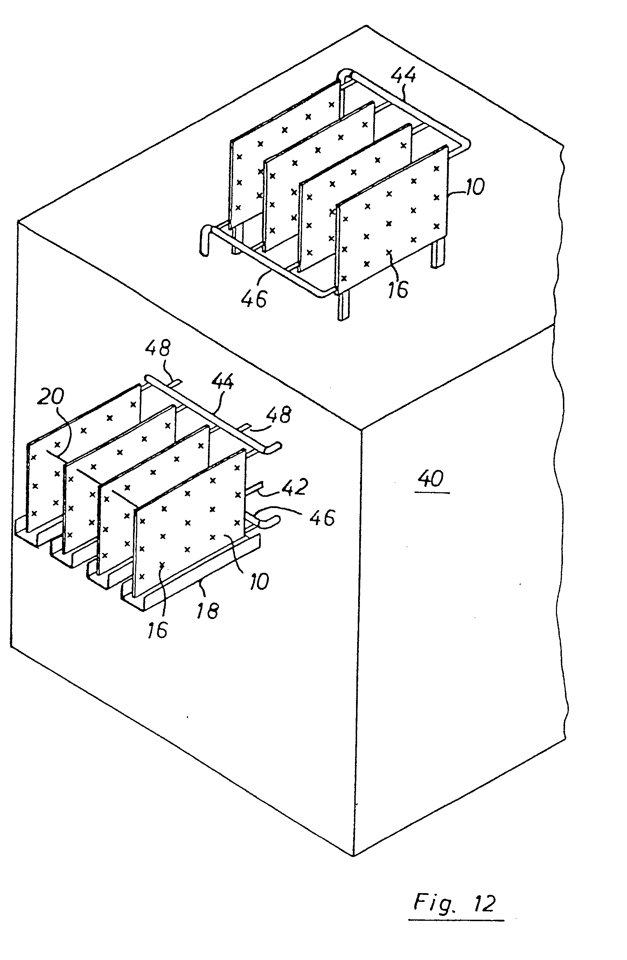

In Fig. 12 sind Anordnungsmöglichkeiten von Wärmekollektoren gemäss der Erfindung auf einem Flachdach und vor einer Fassade eines Gebäudes 40 dargestellt. Bei der Anordnung auf dem Flachdach genügt meist die Verwendung von Haltern, da keine unmittelbare Gefahr für Menschen gegeben ist. Ist dagegen der Wärmekollektor vor einer Fassade angeordnet mit senkrecht zur Fassade verlaufenden Wärmetauschelementen oder auf einem Schrägdach vorgesehen, von welchem auftreffende Eisteile abrutschen können, so sind Halter 16 und Auffangrinnen 18 erforderlich, um mit Sicherheit eine Gefährdung von Personen, die sich vor dem Gebäude aufhalten, auszuschliessen. Die einzelnen Auffangrinnen können, wie in Fig. 10 dargestellt, einen freien Auslauf an ihrem vorderen Ende aufweisen, gegebenenfalls ist es jedoch auch möglich, den freien Auslauf zu verschliessen und die Auffangrinnen an einen Abflusskanal anzuschliessen.

Um die Befestigung des mehrere nebeneinander angeordnete Wärmetauschelemente aufweisenden Wärmekollektors an der vertikalen Fassade zu erleichtern, weisen die Wärmetauschelemente 10 Haltearme 42 auf, die für die Festlegung an der Fassade vorgesehen sind. Die Haltearme 42 sind hierbei in jenem Bereich der Wärmetauschelemente 10 angeordnet, der bei der Montage in der Nähe der Fassade zu liegen kommt.

Eine weitere Befestigungsart, die allein oder zusätzlich verwendet werden kann, besteht darin, dass Vorlaufsammler 44 und Rücklaufsammler 46 mit Haltearmen 48 ausgerüstet sind, die ebenfalls für die Festlegung an der Fassade vorgesehen sind. Die Sammler 44, 46, welche für den Anschluss an die Vorlauf- und Rücklaufleitung der Anlage vorgesehen sind, bestehen aus Rohrstücken, an welche die Wärmetauschelemente angeschlossen sind und die zusammen mit Verbindungsankern den Wärmekollektor zu einer Baueinheit zusammenfassen. Da die Sammler vorzugsweise an jener Seite des Wärmekollektors angeordnet sind, die bei der Montage in der Nähe der Fassade zu liegen kommt, ist eine einfache Festlegung der Haltearme an der Fassade möglich.

Die Flächen der in den Figuren dargestellten Wärmetauschelemente betragen jeweils etwa 1 bis 10 m². Hierbei ist es möglich, die Wärmetauschelemente 10 jeweils aus einzelnen, kleineren Einzelelementen zusammenzusetzen, so dass mit einer einzigen Baugrösse eines Einzelelements Wärmetauschelemente 10 von verschiedener Grösse zusammengesetzt werden können.

Die in den Fig. 7 bis 11 gezeigten Halter können auf übliche Weise, zum Beispiel durch Schweissen, an den Wärmetauschelementen befestigt werden.

Für die Bemessung der Auffangrinnen können folgende Richtwerte gelten: Länge mindestens gleich der Länge des zugeordneten Wärmetauschelements, Tiefe der Auffangrinnen jeweils etwa 5 bis 20 cm, lichter Abstand des oberen Randes eines vertikalen Schenkels zur zugeordneten Wärmetauschfläche 14 etwa 5 bis 20 cm. Bei den vorgenannten Angaben über den lichten Abstand und somit die Breite der Auffangrinnen ist zu beachten, dass im Falle mehrerer nebeneinander angeordneter Wärmetauschelemente es vorteilhaft ist, wenn sich nebeneinanderliegende Auffangrinnen nicht berühren, sondern zwischen ihren vertikalen Schenkeln jeweils ein Luftspalt 50 verbleibt (vgl. Fig. 5). Hierdurch ist eine freie Luftzirkulation zu den Wärmetauschflächen gewährleistet.

## Patentansprüche

1. Wärmekollektor für die Aufnahme von Umgebungswärme mit mindestens einem etwa vertikal angeordneten Wärmetauschelement (10), insbesondere mit wenigstens einer an seinem unteren Endbereich angeordneten Auffangrinne (18, 19, 22), dadurch gekennzeichnet, dass die von der Umgebungsluft berührte Wärmetauschfläche (14) des Wärmetauschelements (10) wenigstens bereichsweise Halter (16) für eine sich bildende Eisschicht aufweist.

2. Wärmekollektor nach dem Anspruch 1, dadurch gekennzeichnet, dass die Auffangrinne (18, 22) unterhalb des Wärmetauschelements (10) angeordnet ist (Fig. 1 bis 3).

3. Wärmekollektor nach dem Anspruch 1, dadurch gekennzeichnet, dass die Auffangrinne (19) am unteren Rand des Wärmetauschelemente (10) angeordnet ist (Fig. 3 und 4).

4. Wärmekollektor nach einem der Ansprüche 1 bis 3, dadurch gekennzeichnet, dass bei mehreren nebeneinander angeordneten Wärmetauschelementen (10) benachbarte Wärmetauschelemente wenigstens paarweise mit einer gemeinsamen Auffangrinne (22) versehen sind (Fig. 5).

5. Wärmekollektor nach einem der Ansprüche 1 bis 4, dadurch gekennzeichnet, dass die Halter (16) gleichmässig über die Wärmetauschfläche (14) verteilt angeordnet sind.

6. Wärmekollektor nach einem der Ansprüche 1 bis 5, dadurch gekennzeichnet, dass die Halter (16) als Vorsprünge ausgebildet sind.

7. Wärmekollektor nach dem Anspruch 6, dadurch gekennzeichnet, dass die Vorsprünge im wesentlichen aus Stiften (30), Haken (32), Nägeln (34), Kurzrippen (36) oder dachförmigen Blechteilen (38) bestehen (Fig. 7 bis 11).

8. Wärmekollektor nach einem der beiden Ansprüche 6 oder 7, dadurch gekennzeichnet, dass die Vorsprünge in gegenseitig versetzten Reihen angeordnet sind (Fig. 6).

9. Wärmekollektor nach einem der Ansprüche 6 bis 8, dadurch gekennzeichnet, dass bei mehreren nebeneinander angeordneten Wärmetauschelementen (10) wenigstens einige Vorsprünge als Verbindungsanker (20) benachbarter Wärmetauschelemente (10) ausgebildet sind (Fig. 5).

10. Wärmekollektor nach einem der Ansprüche 6 bis 9, dadurch gekennzeichnet, dass die Vorsprünge jeweils eine Oberfläche aufweisen, die gross ist im Verhältnis zum Querschnitt.

11. Wärmekollektor nach einem der Ansprüche 7 bis 10, dadurch gekennzeichnet, dass die Vorsprünge in der Nähe der Wärmetauschfläche (14) wenigstens eine Stelle (28) mit verringertem Querschnitt aufweisen (Fig. 8).

12. Wärmekollektor nach einem der Ansprüche 7 bis 11, dadurch gekennzeichnet, dass die Vorsprünge (30, 36, 38) unter einem Winkel α von vorzugsweise 60 bis 80° zur Vertikalen nach oben geneigt sind.

13. Wärmekollektor nach einem der Ansprüche 1 bis 12, dadurch gekennzeichnet, dass bei mehreren nebeneinander angeordneten und durch Vorlaufsammler (44) sowie Rücklaufsammler (46) miteinander verbundenen Wärmetauschelementen (10) Haltearme (42, 48) an den Wärmetauschelementen (10) und/oder an den Sammlern (44, 46) vorzugsweise lösbar angeordnet sind für die Befestigung des Wärmekollektors an einer Fassade oder etwa vertikalen Wand (Fig. 12).

## Claims

1. A heat collector for receiving ambient heat comprising at least one heat exchanger element (10) disposed approximately vertically, and in particular comprising at least one collecting trough (18, 19, 22) provided in its lower end region, characterized in that the heat exchange surface (14) of the heat exchanger element (10) in contact with the ambient air comprises, at least in given areas, holding means (16) for a layer of ice which forms.

2. A heat collector according to Claim 1, characterized in that the collecting trough (18, 22) is provided beneath the heat exchanger element (10) (Figs. 1 to 3).

3. A heat collector according to Claim 1, characterized in that the collecting trough (19) is provided at the lower edge of the heat exchanger element (10) (Figs. 3 and 4).

4. A heat collector according to any one of Claims 1 to 3, characterized in that where a plurality of heat exchanger elements (10) are arranged side-by-side, adjacent heat exchanger elements are provided at least in pairs with a common collecting trough (22) (Fig. 5).

5. A heat collector according to any one of Claims 1 to 4, characterized in that the holding means (16) are arranged uniformly distributed over the heat exchange surface (14).

6. A heat collector according to any one of Claims 1 to 5, characterized in that the holding means (16) are formed as projections.

7. A heat collector according to Claim 6, characterized in that the projections consist essentially of pins (30), hooks (32), nails (34), short ribs (36) or roof-shaped sheet metal parts (38) (Figs. 7 to 11).

8. A heat collector according to Claim 6 or 7, characterized in that the projections are arranged in mutually staggered rows (Fig. 6).

9. A heat collector according to any one of Claims 6 to 8, characterized in that where a plurality of heat exchanger elements (10) are arranged side-by-side, at least some projections are formed as connecting ties (20) of adjacent heat exchanger elements (10) (Fig. 5).

10. A heat collector according to any one of Claims 6 to 9, characterized in that the projections each have a surface which is large in proportion to their cross-section.

11. A heat collector according to any one of Claims 7 to 10, characterized in that in the region of the heat exchange surface (14) the projections have at least one area (28) of reduced cross-section (Fig. 8).

12. A heat collector according to any one of Claims 7 to 11, characterized in that the projections (30, 36, 38) are inclined upwards at an angle α of preferably 60° to 80° to the vertical.

13. A heat collector according to any one of Claims 7 to 12, characterized in that where a plurality of heat exchanger elements (10) are arranged side-by-side and connected together by feed headers (44) and return headers (46), holding arms (42, 48) are provided — preferably releasably — on the heat exchanger elements (10) and/or on the headers (44, 46) in order to secure the heat collector to a façade or an approximately vertical wall (Fig. 12).

## Revendications

1. Collecteur thermique pour l'absorption de la chaleur environnante comprenant au moins un élément d'échange thermique (10) disposé verticalement, en particulier ayant au moins une rigole collectrice (18, 19, 22) se trouvant dans sa zone inférieure extrême, caractérisé en ce que la surface d'échange thermique (14), en contact avec l'air ambiant, de l'élément d'échange thermique (10) présente au moins dans son voisinage des supports (16) destinés à une couche de glace en formation.

2. Collecteur thermique selon la revendication 1, caractérisé en ce que la rigole collectrice (18, 22) est disposée en dessous de l'élément d'échange thermique (10) (fig. 1 à 3).

3. Collecteur thermique selon la revendication 1, caractérisé en ce que la rigole collectrice (19) se trouve sur le bord inférieur de l'élément d'échange thermique (10) (fig. 3 et 4).

4. Collecteur thermique selon l'une des revendications 1 à 3, caractérisé en ce que, lorsqu'il y a plusieurs éléments d'échange thermique (10) disposés l'un près de l'autre, des éléments d'échange thermique voisins sont munis au moins deux à deux d'une rigole collectrice (22) commune (fig. 5).

5. Collecteur thermique selon l'une des revendications 1 à 4, caractérisé en ce que les supports (16) sont répartis régulièrement sur la surface d'échange thermique (14).

6. Collecteur thermique selon l'une des revendications 1 à 5, caractérisé en ce que les supports (16) sont conformés comme des parties saillantes.

7. Collecteur thermique selon la revendication 6, caractérisé en ce que les parties saillantes sont constituées essentiellement de tiges (30), crochets (32), clous (34), courtes ailettes (36) ou pièces de tôle (38) en forme de toits (fig. 7 à 11).

8. Collecteur thermique selon l'une des revendications 6 ou 7, caractérisé en ce que les parties saillantes sont disposées dans des rangées mutuellement décalées (fig. 6).

9. Collecteur thermique selon l'une des revendications 6 à 8, caractérisé en ce que, lorsqu'il y a plusieurs éléments d'échange thermique (10) disposés l'un à côté de l'autre, au moins quelques parties saillantes sont conformées comme des armatures de liaison (20) d'éléments d'échange thermique (10) voisins (fig. 5).

10. Collecteur thermique selon l'une des revendications 6 à 9, caractérisé en ce que les parties saillantes présentent respectivement une surface qui est importante en rapport à la section transversale.

11. Collecteur thermique selon l'une des revendications 7 à 10, caractérisé en ce que les parties saillantes présentent au voisinage de la surface d'échange thermique (14) au moins un emplacement (28) ayant une section transversale réduite (fig. 8).

12. Collecteur thermique selon l'une des revendications 7 à 11, caractérisé en ce que les parties saillantes (30, 36, 38) sont inclinées vers le haut en faisant un angle α allant de préférence de 60 à 80° par rapport à la verticale.

13. Collecteur thermique selon l'une des revendications 1 à 12, caractérisé en ce que, lorsqu'il y a plusieurs éléments d'échange thermique (10) disposés l'un à côté de l'autre, et reliés les uns aux autres par des collecteurs avant (44) ainsi que par des collecteurs arrière (46), on dispose, de préférence amoviblement, des bras de maintien (42, 48) sur les éléments d'échange thermique (10) et/ou sur les collecteurs (44, 46), pour fixer le collecteur thermique à une façade ou à une paroi à peu près verticale (fig. 12).

21

16

12

21

10

14

12

23

14

II

23

18

*Fig. 1*

21

10

14 14

16 16

18

*Fig. 2*

10

18

*Fig. 3*

10

19 19

*Fig. 4*

10 20 16

14

14 10

18 50 22

*Fig. 5*

10

16

× × × × ×
× × × ×
× × × × ×
× × × ×
× × × × ×

*Fig. 6*

Fig. 7

Fig. 8

Fig. 9

Fig. 10

Fig. 11

Fig. 12